# EUROPEAN PATENT SPECIFICATION

(11) **EP 0 490 611 B1**
(45) Date of publication and mention of the grant of the patent: **10.01.1996**
(21) Application number: 91311423.7
(22) Date of filing: 09.12.1991
(51) Int. Cl.: C03C 8/14, C03C 17/04, C03B 23/023, C03C 8/18

(54) **Process for manufacturing a formed glass sheet having ceramic paint thereon**
Verfahren zur Herstellung einer geformten Glasscheibe mit aufgetragener keramischer Farbschicht
Procédé de fabrication de feuille de verre moulée recouverte de peinture céramique

(30) Priority: 10.12.1990 US 624938
(43) Date of publication of application: 17.06.1992
(73) Proprietor: FORD MOTOR COMPANY LIMITED, Brentwood Essex (GB); FORD FRANCE S. A., F-92506 Rueil-Malmaison Cédex (FR); FORD-WERKE AKTIENGESELLSCHAFT, D-50725 Köln (DE)
(72) Inventor: Boaz, Premakaran T., Livonia, Michigan 48154 (US)
(74) Representative: Messulam, Alec Moses

(56) References cited:
- EP-A- 0 058 529
- EP-A- 0 249 361
- EP-A- 0 362 136
- LU-A- 55 954
- US-A- 4 505 671
- US-A- 4 529 380
- US-A- 4 684 388
- US-A- 4 684 389

## Description

This invention relates generally to a process for manufacturing a formed glass sheet having ceramic paint thereon. More particularly, the process includes the step of accelerating the oxidation of metal particles contained within the ceramic paint by directing a stream of oxygen-containing gas onto the painted glass surface while the glass sheet is being conveyed through and heated by a furnace. The accelerated oxidation of the metal particles in the ceramic paint allows for an increased throughput of glass sheets through the furnace while maintaining the non-stick characteristic of the paint during a subsequent forming operation.

Ceramic paint compositions are generally known to those ordinarily skilled in the art of applying ceramic paint fields to automotive and architectural glazings. Such ceramic paints are useful, for example, to form borders around the peripheral marginal surfaces of automotive glazings used as windshields, sidelights, and backlights of motor vehicles.

Typical ceramic paints generally contain a mixture of metal oxides, one or more low melting glass frits, and a vehicle. The metal oxides act together as a colouring agent for the paint, and are generally non-reactive with one another as well as non-reactive with other compounds contained in the ceramic paint or the glass to which the ceramic paint is applied. The low melting glass frits generally melt at temperatures below 1,300°F, and ultimately fuse the ceramic paint to the glass sheet to insure that the ceramic paint field remains affixed to the glass sheet after being cooled to room temperature. The vehicle allows the ceramic paint composition to be applied to the surface of a glass sheet by conventional paint application processes. Generally, an organic vehicle, e.g., pine oil, is used to allow the ceramic paint to be applied by brushing, spreading, or screen printing.

It is known to add metal particles to a ceramic paint composition which is applied to the surface of a glass sheet, to prevent adhesion of the paint to the press bending mold surfaces in a process wherein the glass sheet having the ceramic paint thereon is heated to its softening temperature and thereafter formed. U.S. Patents Nos. 4,684,388 and 4,684,389 disclose the addition of zinc metal powder to a ceramic paint composition which is applied to a glass sheet to form an automotive glazing having a concealment band at the peripheral marginal surface thereof. The glass sheet having the ceramic paint thereon is conveyed generally through a roller hearth furnace, to heat the glass sheet to its softening temperature while simultaneously divitrifying the ceramic paint and oxidising the zinc metal particles contained therein. Thereafter, the softened glass sheet having the devitrified ceramic paint thereon is formed in a press bending operation, wherein the forming surface of one of the press bending moulds is brought into engagement with the painted surface of the glass sheet. Due to the addition of the zinc metal particles in the ceramic paint composition, and the subsequent oxidation of the zinc metal particles during the heating of the glass sheet in the roller hearth furnace, the devitrified ceramic paint does not stick to the press bending mold surface.

Unfortunately, when it was discovered that metal powders added to ceramic paint compositions would eliminate sticking of the paint to a forming surface, it was also determined that the rate of oxidation of the metal powders limited the performance of the roller hearth furnace, due to the residence time required at the elevated temperature to sufficiently oxidise the metal particles. In order to adequately oxidise the metal particles of the ceramic paint for non-stickability in the subsequent forming operation, and simultaneously operate at a high throughput rate of glass sheets through the roller hearth furnace, either the rate of speed that the glass sheets were conveyed through the furnace had to be reduced, or the length of the roller hearth furnace had to be increased, to accommodate the residence time requirement at the elevated ceramic paint temperature.

U.S. Patents Nos. 4,505,671 and 4,529,380 disclose the use of gas jet pumps within a roller hearth furnace, to provide forced convection heating of glass sheets to increase the rate at which the glass sheets are heated to their softening point and to provide a uniform temperature profile within the heating chamber. Although such a concept is useful for reducing the time necessary to heat and soften a glass sheet, and therefore could result in increased throughput or the use of a shorter heating chamber when used to heat non-painted glass sheets, merely heating a glass sheet having a metal powder-containing ceramic paint thereon at a faster rate would not significantly increase the rate of oxidation of the metal particles. Therefore, the advantages of placing gas jet pumps in a roller hearth furnace, as disclosed in the aforementioned patents, would not inure to a process for the heating of glass sheets having a metal powder-containing ceramic paint thereon, wherein the metal particles must achieve a certain level of oxidation (not merely an increased level of temperature) before they will effectuate the non-stickability of the ceramic paint in a subsequent forming operation.

It would be desirable to increase the rate at which glass sheets having a metal powder-containing ceramic paint thereon may be conveyed through a roller hearth furnace, while maintaining the non-stickability of the ceramic paint in a subsequent press bending operation, by increasing the rate of oxidation of the metal powder particles contained therein.

It must be noted that the prior art referred to hereinabove has been collected and examined only in light of the present invention as a guide. It is not to be inferred that such diverse art would otherwise be assembled absent the motivation provided by the present invention, nor that the cited prior art when considered in combination suggests the present invention absent the teachings herein.

Accordant with the present invention, a process for manufacturing a formed glass sheet having a fired ceramic paint field thereon, wherein the ceramic paint contains a metal powder to prevent adhesion of the paint to a press mold during the subsequent forming of the glass sheet, and wherein the process may be carried out at a high furnace throughput rate, has surprisingly been discovered. The process comprises first providing a glass sheet having a metal powder-containing ceramic paint field on the surface thereof. The glass sheet is conveyed through a furnace, where it is heated sufficiently to soften the glass sheet, and where at least a portion of the metal powder contained in the ceramic paint is oxidised. Simultaneously, the oxidation of the metal powder is accelerated by directing a stream of an oxygen-containing gas onto the ceramic paint field. This reduces the time required for conveying the glass sheet through the furnace to less than would otherwise be required if the accelerating gas stream were not used. The glass sheet is thereafter formed by engaging the painted surface thereof with a forming mold. Finally, the glass sheet is separated from the forming mold. The metal powder addition to the ceramic paint and its degree of oxidation is effective to prevent adhesion of the ceramic paint to the forming mold.

The inventive process employs a ceramic paint containing a metal powder, which is oxidised to a degree necessary to prevent sticking of the paint to a press forming surface in a subsequent shaping operation. The process includes the critical step of accelerating the oxidation of the metal powder, in order to increase the throughput of the glass sheets through the heating chamber while maintaining the non-stick characteristic of the ceramic paint during the subsequent forming step.

The process of the present invention is particularly suited for manufacturing automotive and architectural glazings having opaque concealment bands on their peripheral marginal surfaces.

The present invention is directed to a process for manufacturing a formed glass sheet having a fired ceramic paint field thereon. By the term "field" as it is used herein is meant that the paint is applied to a portion of the surface of the glass sheet, so as to form areas of the glass sheet which are coated with a layer of the paint, as distinguished from areas of the glass sheet where the glass surface remains uncoated. Methods for applying ceramic paint to at least a portion of a surface of a glass sheet utilising conventional paint application methods, e.g., screen printing, are well known in the glass art. The ceramic paint of the present invention contains a metal powder, which prevents adhesion of the paint to a forming mold in a subsequent press bending operation. Such a glass sheet having a ceramic paint field thereon must then be heated to soften the glass sheet and fuse the ceramic paint thereto. Thereafter, the glass sheet is formed, e.g., by a press bending operation, wherein forming moulds engage opposite surfaces of the glass sheet and press the glass sheet therebetween. The painted surface of the glass sheet parts away from the forming mold without leaving a residue of adhered ceramic paint on the mold surface.

The glass sheet having a metal-containing ceramic paint field thereon is conveyed through a furnace, where the glass sheet is heated to soften the glass so that it may be formed. During the conveyance of the glass sheet through the furnace, the metal-containing ceramic paint is fused together and to the glass sheet, and the metal powder particles are at least partially oxidised. Oxidation of the metal particles, which otherwise naturally results from the elevated temperature and air atmosphere within the furnace, is accelerated by directing an oxygen-containing gas onto the ceramic paint. The degree to which the metal powder particles are oxidised determines the efficacy of the metal powder addition to the ceramic paint in preventing adhesion of the ceramic paint to the forming mold during the subsequent forming operation. A higher degree of oxidation results in a reduced tendency for the ceramic paint to stick to the forming mold. Therefore, the use of the oxygen-containing gas to accelerate the metal powder oxidation allows a faster rate of conveyance of the glass sheets through the furnace while maintaining the non-stick characteristic of the ceramic paint.

Suitable glass sheets for practising the process of the present invention may be prepared from any type of glass generally known in the art of glass making. Typical glass sheets include soda-lime-silica glass made into sheets by the well known float glass process.

Metal powder-containing ceramic paint compositions are well known in the art of glass fabrication, and generally comprise a ceramic frit, a pigment, a vehicle, and the metal powder. Generally, the ceramic frit includes one or more glass frits prepared from conventional lead-borosilicate glass which is high in lead content. Alternatively, the ceramic frit may comprise a combination of metal oxides selected from the oxides of zinc, lead, titanium, zirconium, sodium, boron, lithium, potassium, calcium, aluminium, tin, vanadium, molybdenum, magnesium, iron, manganese, and the like. The pigment generally comprises a mixture of metal oxides which together act as a colouring agent for the paint. These metal oxides include, but are not necessarily limited to, the oxides of chromium, cobalt, nickel, manganese, iron, and copper. Vehicles suitable for use in the metal powder-containing ceramic paints generally comprise organic materials including pine oil, vegetable oils, mineral oils, low molecular weight petroleum fractions, hot melt materials, ultraviolet radiation curable polymer resins, vinyl resins, thermoplastic resins, polyolefins, solvents, and the like. The metal powders useful for practising the present invention include, but are not necessarily limited to, powders prepared from zinc, aluminium, tin, antimony, lead, chromium, cobalt, copper, manganese, iron, silicon, titanium, tungsten, and bismuth, as well as alloys and mixtures thereof. A preferred metal powder comprises finely divided zinc metal powder. The metal powder is generally present in the ceramic paint composition at a concentration from about 5% to about 50% by weight of the metal powder-containing ceramic paint. A particularly useful ceramic paint according to the present invention is a zinc metal powder-containing ceramic paint composition such as is described in U.S. Patents Nos. 4,684,388 and 4,684,389, both to Boaz, which are incorporated in their entirety herein by reference thereto.

The furnace through which the glass sheets are conveyed according to the present invention is generally known in the art as a roller hearth furnace, and may be of any conventional design known to be useful for heating glass sheets. Typically, such a furnace comprises a tunnel-type structure having top, bottom, and side walls which define an elongate heating chamber. The furnace is generally heated by suitable heating means, e.g., gas fired burners or electrical resistance elements positioned in the top, bottom, and side walls, which are suitably controlled to provide a desired heating pattern for the glass sheets moving therethrough. The glass sheets are transported through the furnace on a roller conveyer comprising a series of driven rolls which extend from the entrance of the furnace through an exit port in the end wall of the furnace. As the glass sheets are conveyed through the furnace on the roller conveyer, they are heated to a temperature above the plastic set temperature of the glass, to a temperature referred to herein as a "softening temperature". By the term "plastic set temperature" is meant the temperature below which an applied stress will not cause permanent deformation to the glass sheets, and above which the glass sheets are capable of being formed.

The glass sheet having a metal powder-containing ceramic paint field thereon is heated in the furnace to a temperature and maintained for a period of time, sufficient to cause the ceramic paint to devitrify and simultaneously fuse to the glass sheet. The temperature is generally from about 900°F to about 1,100°F. The time required for devitrification and adhesion to the glass sheet is generally from about 1 to about 5 minutes. Preferably, the time is from about 2 to about 3 minutes. The ceramic frit is divitrified, converting it to a crystalline or semicrystalline phase characterised by a glassy matrix. Simultaneously, the ceramic frit fuses to the glass sheet. The temperature required for devitrifying and fusing the ceramic paint is lower than the softening point of the glass sheet, yet is high enough to allow for bakeout or volitization of the organic components of the ceramic paint. Thus, the ceramic paint field is "fired" as the term is generally used herein.

The metal powder component of the ceramic paint is effective to prevent adhesion of the ceramic paint to a press bending mold in a subsequent forming operation. Following the heating step of the present process, the glass sheets emerge through the exit port in the end wall of the roller hearth furnace, and are conveyed toward and positioned within the glass sheet forming station, comprising a mating pair of upper and lower press bending moulds which are designed to impart a desired curvature to the glass sheets. While not wishing to be bound by any particular theory concerning the mechanism by which the metal powder prevents adhesion, it is believed that at least a portion of the metal powder in the ceramic paint oxidises to form a metal oxide barrier at the surface of the paint, which insulates the low melting ceramic frit and isolates same from the press bending mold. The degree to which the metal powder is oxidised determines its ability to prevent adhesion between the ceramic paint and the press bending mold; greater oxidation results in diminished adhesion. Thus, according to the present invention, the metal powder is oxidised to such a degree that the ceramic paint, while engaging the surface of the mold, does not adhere thereto. It is to be understood that, although oxidation of the metal powder is referred to herein as occurring "in the ceramic paint," the majority of oxidation actually occurs substantially at the exposed surface of the ceramic paint field.

Oxidation of the metal powder is accelerated, according to the present invention, by directing a stream of oxygen-containing gas directly onto the ceramic paint field as the glass sheet is conveyed through the roller hearth furnace. Suitable gases include, but are not necessarily limited to, air and oxygen, and mixtures thereof. A preferred oxygen-containing gas comprises air. preferably, the gas is pre-heated to the furnace temperature, so as not to cool the surface of the glass sheet during its conveyance through the furnace. The pressure and flow rate of the oxygen-containing gas may easily be determined by routine experimentation, and need only be great enough so as to accelerate the oxidation of the metal powder sufficiently to allow an increased throughput of glass sheets through the roller hearth furnace while maintaining the non-stick characteristic of the ceramic paint in the subsequent forming operation. Thus, the time required for heating the glass sheets to a softening temperature at which they can be formed, and for oxidising the metal powder component of the ceramic paint to insure its non-adhesion in the subsequent press forming operation, is reduced by the impingement of an oxygen-containing gas directly onto the painted surfaces of the glass sheets conveyed through the furnace. Conventional apparatus for compressing, heating, distributing, and applying the oxygen-containing gas of the present invention is well known, and generally may comprise a compressor, heat exchanger, and an array of manifolded piping and nozzles which direct the gas onto the surface of the painted glass sheet.

Finally, after the glass sheet has been formed in a press bending operation, the painted surface of the formed glass sheet is parted away from the press bending mold without adhesion of the paint to the mold surface.

## Claims

1. A process for preparing a formed glass sheet having a fired ceramic paint field thereon, comprising the steps of:
A. providing a glass sheet having a metal powder-containing ceramic paint field on a surface thereof;
B. conveying the glass sheet through a furnace, wherein the glass sheet is heated sufficiently to soften the glass sheet so that it may be formed, and at least a portion of the metal powder contained in the ceramic paint is oxidised;
C. simultaneously with step B, accelerating the oxidation of the metal powder by directing a stream of an oxygen-containing gas onto the ceramic paint field, to reduce the time required for conveying the glass sheet in step B to less than would otherwise be required if this step C were eliminated from the process;
D. forming the softened glass sheet, by engaging the painted surface thereof with a forming mold; and
E. separating the glass sheet from the forming mold, the metal powder addition to the ceramic paint and its degree of oxidation being effective to prevent adhesion of the ceramic paint to the forming mold.

2. A process for preparing a formed glass sheet having a fired ceramic paint field thereon according to Claim 1, wherein the glass sheet comprises soda-lime-silica glass.

3. A process for preparing a formed glass sheet having a fired ceramic paint field thereon according to Claim 1 or 2, wherein the metal powder is selected from the group consisting of powders prepared from zinc, aluminium, tin, antimony, lead, chromium, cobalt, copper, manganese, iron, silicon, titanium, tungsten, bismuth, and alloys and mixtures thereof.

4. A process for preparing a formed glass sheet having a fired ceramic paint field thereon according to Claim 1, wherein the glass sheet is heated to a temperature from 482°C to 593°C (900°F to 1,100°F).

5. The process for preparing a formed glass sheet having a fired ceramic paint field thereon according to any one of Claim 1 to 3, wherein the oxygen-containing gas comprises a gas selected from the group consisting of air and oxygen, and mixtures thereof.

6. The process for preparing a formed glass sheet having a fired ceramic paint field thereon according to any one of the preceding claims, wherein the oxygen-containing gas is heated prior to directing it onto the ceramic paint field.

## Patentansprüche

1. Ein Vorgang zum Vorbereiten eines geformten Glasbands, auf dem ein gebranntes Keramikfarbfeld liegt, der folgende Etappen beinhaltet :
A. Erstellung eines Glasbands, das auf einer seiner Oberflächen ein metallpulverhaltiges Keramikfarbfeld hat ;
B. Durchlaufen des Glasbands durch einen Ofen, in dem das Glasband ausreichend erhitzt wird, um es weich zu machen, so dass es geformt werden kann und mindestens ein Anteil des in der Keramikfarbe enthaltenen Metallpulvers oxydiert wird ;
C. gleichzeitig mit der Etappe B eine Beschleunigung der Oxydation des Metallpulvers durch das Zuleiten eines sauerstoffhaltigen Gasstroms auf das Keramikfarbfeld, um die, für den Durchlauf des Glasbands in der Etappe B erforderliche Zeit auf einen niedrigeren Wert zu reduzieren, als sonst erforderlich wäre, wenn diese Etappe C vom Vorgang ausgeschlossen würde ;
D. Formgebung des geweichten Glasbands durch das Einrasten dessen angestrichener Oberfläche mit einer Form ; und
E. Trennung des Glasbands von der Form, das Hinzufügen des Metallpulvers zur Keramikfarbe und wobei sein Oxydationsgrad bewirkt, dass ein Haften der Keramikfarbe an der Form vermieden wird.

2. Ein Vorgang zur Herstellung eines geformten Glasbands, auf dem ein gebranntes Keramikfarbfeld liegt, nach Anspruch 1, in dem das Glasband Soda-Kalk-Silizium-Glas enthält.

3. Ein Vorgang zur Herstellung eines geformten Glasbands, auf dem ein gebranntes Keramikfarbfeld liegt, nach dem Anspruch 1 oder 2, in dem das Metallpulver aus einer Gruppe gewählt wird, die aus Pulvern besteht welche aus Zink, Aluminium, Zinn, Antimon, Blei, Chrom, Kobalt, Kupfer, Mangan, Eisen, Silizium, Titan, Wolfram, Wismut und Legierungen und Mischungen dieser Stoffe bestehen.

4. Ein Vorgang zur Herstellung eines geformten Glasbands, auf dem ein gebranntes Keramikfarbfeld liegt, nach Anspruch 1, in dem das Glasband auf eine Temperatur erhitzt wird, die zwischen 482° C und 593° C (900° F bis 1100° F) liegt.

5. Der Vorgang zur Herstellung eines geformten Glasbands, wobei auf diesem ein gebranntes Keramikfarbfeld liegt, nach irgendeinem der Ansprüche 1 bis 3, in dem das sauerstoffhaltige Gas aus einer Gruppe gewählt wurde, die aus Luft und Sauerstoff und aus deren Mischungen besteht.

6. Ein Vorgang zur Herstellung eines geformten Glasbands, auf dem ein gebranntes Keramikfarbfeld liegt, nach irgendeinem der vorausgegangenen Ansprüche, in dem das sauerstoffhaltige Gas erhitzt wird, bevor es auf das Keramikfarbfeld geleitet wird.

## Revendications

1. Procédé pour préparer une feuille de verre formée portant à sa surface un champ de peinture céramique cuite, comprenant les étapes consistant à :
A. fournir une feuille de verre portant à sa surface un champ de peinture céramique contenant de la poudre métallique,
B. transporter la feuille de verre à travers un four, dans lequel la feuille de verre est chauffée de manière suffisante pour ramollir la feuille de verre de telle sorte qu'elle puisse être formée, et dans lequel au moins une partie de la poudre métallique contenue dans la peinture céramique est oxydée,
C. en même temps que l'étape B, accélérer l'oxydation de la poudre métallique en dirigeant un flux d'un gaz contenant de l'oxygène sur le champ de peinture céramique, afin de réduire le temps requis pour transporter la feuille de verre au cours de l'étape B à une durée inférieure à celle qui serait sinon requise si cette étape C était éliminée du procédé,
D. former la feuille de verre ramollie, en mettant sa surface peinte en contact avec une matrice de formage, et
E. séparer la feuille de verre de la matrice de formage, l'ajout de poudre métallique à la peinture céramique et son degré d'oxydation étant efficaces pour empêcher l'adhérence de la peinture céramique à la matrice de formage.

2. Procédé pour préparer une feuille de verre formée portant à sa surface un champ de peinture céramique cuite selon la revendication 1, dans lequel la feuille de verre comprend du verre calcaire natron.

3. Procédé pour préparer une feuille de verre formée portant à sa surface un champ de peinture céramique cuite selon la revendication 1 ou 2, dans lequel la poudre métallique est choisie parmi le groupe composé de poudres préparées à partir de zinc, d'aluminium, d'étain, d'antimoine, de plomb, de chrome, de cobalt, de cuivre, de manganèse, de fer, de silicium, de titane, de tungstène, de bismuth, et d'alliages et de mélanges de ceux-ci.

4. Procédé pour préparer une feuille de verre formée portant à sa surface un champ de peinture céramique cuite selon la revendication 1, dans lequel la feuille de verre est chauffée à une température comprise entre 482 °C et 593°C (900°F et 1 100°F).

5. Procédé pour préparer une feuille de verre formée portant à sa surface un champ de peinture céramique cuite selon l'une quelconque des revendications 1 à 3, dans lequel le gaz contenant de l'oxygène comprend un gaz choisi parmi le groupe composé de l'air et de l'oxygène, et de mélanges de ceux-ci.

6. Procédé pour préparer une feuille de verre formée portant à sa surface un champ de peinture céramique cuite selon l'une quelconque des revendications précédentes, dans lequel le gaz contenant de l'oxygène est chauffé avant d'être dirigé sur le champ de peinture céramique.
